# FASCICULE DE BREVET EUROPEEN

(11) **EP 3 278 841 B1**
(45) Date de publication et mention de la délivrance du brevet: **13.03.2024**
(21) Numéro de dépôt: 17179885.3
(22) Date de dépôt: 05.07.2017
(51) Int. Cl.: A62C 99/00, A62B 7/14, A62C 3/08, B64D 37/32

(54) **PROCEDE ET SYSTEME D'INERTAGE D'UN RESERVOIR DE CARBURANT**
INERTISIERUNGSVERFAHREN UND -SYSTEM EINES KRAFTSTOFFTANKS
METHOD AND SYSTEM FOR INERTING A FUEL TANK

(30) Priorité: 03.08.2016 FR 1657547
(43) Date de publication de la demande: 07.02.2018
(73) Titulaire: Zodiac Aerotechnics, 42230 Roche La Moliere (FR)
(72) Inventeur: GIROUD, Nelly, 42100 Saint-Étienne (FR); REYNARD, Bruno, 69340 Francheville (FR); VANDROUX, Olivier, 38100 Grenoble (FR); MYSLIWIEC, Emilie, 42350 La Talaudiere (FR)
(74) Mandataire: Delprat, Olivier

(56) Documents cités:
- EP-A1- 2 808 060
- WO-A1-2015/063406
- US-A1- 2006 021 652
- US-A1- 2008 168 798
- US-A1- 2016 009 407
- US-B1- 6 311 904
- US-B1- 8 245 978

## Description

### DOMAINE TECHNIQUE

La présente invention concerne un procédé et un système d'inertage d'un réservoir de carburant d'un aéronef, tel qu'un avion, un hélicoptère ou analogue.

### ART ANTERIEUR

Dans le domaine de l'aéronautique, il est connu un système d'inertage pour générer un gaz d'inertage, tel que de l'azote, ou tout autre gaz neutre tel que le dioxyde de carbone par exemple, et pour introduire ledit gaz d'inertage dans les réservoirs de carburant pour des raisons de sécurité afin de réduire le risque d'explosion desdits réservoirs.

Un système classique d'inertage de l'art antérieur comporte, d'une manière générale, un générateur de gaz d'inertage embarqué dit OBIGGS, selon l'acronyme anglo-saxon « On Board Inert Gas Generating Systems », alimenté en air, par exemple avec de l'air comprimé détourné d'au moins un moteur, à partir de l'étage dit de pression intermédiaire et/ou de l'étage dit de haute pression en fonction de la situation de vol. On notera que l'utilisation d'air comprimé pour le conditionnement d'air est avantageuse car sa pression et sa température sont relativement élevées, de sorte que l'air peut être ajusté sur une large gamme de pressions et de températures désirées. Le système OBIGGS est couplé au réservoir de carburant de l'avion, et sépare l'oxygène de l'air.

Le système OBIGGS comprend au moins un module de séparation d'air contenant, par exemple, des membranes perméables, telles que des membranes de polymère, traversées par un flux d'air. En raison des différentes perméabilités de la membrane à l'azote et à l'oxygène, le système divise le flux d'air de telle sorte qu'un flux d'air à forte teneur en azote et un flux d'air à forte teneur en oxygène, sont obtenus. La fraction d'air enrichi en azote, considérée comme le gaz d'inertage, est acheminée dans les réservoirs de carburant de telle sorte que le mélange d'air et de vapeur de kérosène présent dans cet emplacement est déplacé et évacué hors des réservoirs. Les dispositifs nécessaires à cette opération, tels que des compresseurs, des filtres, des modules de refroidissement à air ou à eaux, et analogues, sont intégrés dans l'installation de gaz d'inertage.

Lorsque le taux d'oxygène présent dans la partie vide du réservoir est inférieur à la limite d'inflammation définie conformément aux exigences de la FAA selon l'acronyme anglo-saxon « Federal Aviation Administration » détaillées dans le document AC25.981-2A en date du 19 septembre 2008 et intitulé « FUEL TANK FLAMMABILITY REDUCTION MEANS » et ses annexes, aucune inflammation ne peut avoir lieu. De ce qui précède, rendre inerte un réservoir de carburant consiste à injecter du gaz d'inertage dans le réservoir pour maintenir le taux d'oxygène présent dans ledit réservoir sous un certain seuil, par exemple 12%.

Il est connu de l'état de la technique la demande internationale de brevet WO 2015/063406, au nom du Demandeur. Cette demande internationale décrit un procédé et un système d'inertage d'un réservoir de carburant d'un aéronef, de conception simple et peu onéreuse, et permettant d'adapter la distribution de gaz d'inertage au besoin réel en gaz d'inertage afin de réduire indirectement la consommation de carburant de l'aéronef.

Ce procédé d'inertage est mis en oeuvre dans un aéronef comprenant au moins un générateur de gaz d'inertage et comporte au moins les étapes consistant à :
- déterminer, en temps réel, le besoin en gaz d'inertage d'au moins un réservoir au cours de l'utilisation de l'aéronef, en fonction d'une mesure, en temps réel, du taux d'oxygène présent dans le réservoir, et des informations relatives au vol de l'aéronef ;
- déterminer, en temps réel, une consigne de débit du générateur de gaz d'inertage en fonction du besoin en gaz d'inertage précédemment calculé, et transmettre, en temps réel, ladite consigne à des moyens de régulation du débit du générateur de gaz d'inertage,
- déterminer au moins une consigne de contrôle de la distribution en gaz d'inertage dans le réservoir, et transmettre en temps réel ladite consigne à des moyens de distribution contrôlée du gaz d'inertage dans le réservoir.

Ainsi, ce procédé d'inertage permet d'adapter la distribution de gaz d'inertage au besoin réel, et permet de réduire indirectement la consommation de carburant.

Cependant, l'injection de gaz d'inertage peut être ajustée de manière plus fine pour correspondre davantage aux besoins réels, et diminuer encore la consommation d'énergie et indirectement de carburant de l'aéronef.

Le document EP 2 808 060 décrit également un procédé et un système d'inertage de l'art antérieur.

### EXPOSE DE L'INVENTION

L'un des buts de l'invention est donc de fournir un procédé d'inertage perfectionné en ce sens qu'il permet de diminuer davantage la consommation de carburant et les coûts liés au fonctionnement d'un système d'inertage.

A cet effet, et conformément à l'invention, il est proposé un procédé d'inertage d'au moins un réservoir de carburant d'un aéronef, au moyen d'au moins un générateur de gaz d'inertage tel que défini dans la revendication 1. Selon l'invention, le générateur de gaz d'inertage est démarré lorsqu'au moins un capteur d'oxygène présent dans le réservoir mesure un taux d'oxygène supérieur à une valeur seuil haute, telle que par exemple 10 % d'oxygène.

De cette manière, le procédé selon l'invention permet d'adapter la distribution de gaz d'inertage aux besoins réels en gaz d'inertage pour satisfaire à la réglementation en vigueur, tout en diminuant la consommation d'énergie et indirectement la consommation de carburant.

Pour réduire davantage la consommation de carburant, le générateur de gaz d'inertage est arrêté lorsque le taux d'oxygène mesuré est inférieur à une valeur seuil basse, telle que par exemple 8 % d'oxygène.

En d'autres termes, l'injection de gaz d'inertage est démarrée lorsque le taux d'oxygène dans le réservoir est supérieur à 10 %, et poursuivie jusqu'à ce que le taux d'oxygène redescende en dessous de 8 %. Une fois en dessous de 8 %, le générateur de gaz d'inertage est arrêté pour économiser de l'énergie. Cette valeur seuil basse permet de stopper le générateur de gaz d'inertage pendant une certaine durée avant que le taux d'oxygène ne remonte jusqu'à une valeur supérieure à 10 %, entrainant le redémarrage dudit générateur.

En tout état de cause, selon une autre caractéristique de l'invention et afin de préparer la phase de descente de l'aéronef en toute sécurité, le générateur de gaz d'inertage est redémarré lorsque des moyens d'information sur le vol de l'aéronef indiquent un certain nombre de minutes, par exemple 70 minutes, avant le début de la phase de descente de l'aéronef. Le nombre de minutes dépend du temps d'arrêt du générateur et des conditions ambiantes.

Il a également été mis au point un système d'inertage d'un réservoir de carburant d'un aéronef tel que défini dans la revendication 5. Ledit système comprend au moins un générateur de gaz d'inertage alimenté en air, des moyens de distribution et d'injection de gaz d'inertage dans le réservoir de carburant, reliés au générateur de gaz d'inertage, et au moins un capteur d'oxygène installé dans le réservoir.

Selon l'invention, le système comprend une unité de gestion connectée au capteur d'oxygène et au générateur de gaz d'inertage, et programmée pour récolter, en temps réel, les mesures issues du capteur d'oxygène et pour démarrer le générateur de gaz d'inertage lorsque la mesure du taux d'oxygène est supérieure à une valeur seuil haute, telle que par exemple 10 % d'oxygène.

L'unité de gestion est aussi programmée pour arrêter le générateur de gaz d'inertage lorsque la mesure du taux d'oxygène est inférieure à une valeur seuil basse, telle que par exemple 8 % d'oxygène.

L'unité de gestion est aussi programmée pour récolter, en temps réel, des informations relatives à la mission de l'aéronef, provenant par exemple de l'ordinateur de bord de l'aéronef, et pour redémarrer le générateur de gaz d'inertage lorsque les informations qu'elle collecte sur la mission de l'aéronef lui indiquent un certain nombre de minutes, par exemple 70 minutes, avant le début de la phase de descente de l'aéronef.

Des modes de réalisations spécifiques de l'invention sont définis dans les revendications dépendantes.

### DESCRIPTION SOMMAIRE DES FIGURES

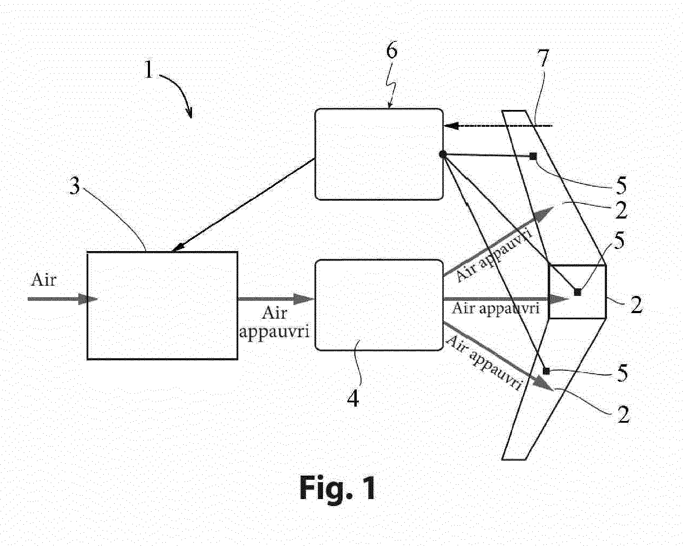

D'autres avantages et caractéristiques ressortiront mieux de la description qui va suivre, donnée à titre d'exemple non limitatif, du procédé d'inertage d'un réservoir de carburant d'un aéronef selon l'invention, à partir de l'unique figure 1 illustrant de manière schématique un système d'inertage pour la mise en oeuvre dudit procédé.

### DESCRIPTION DETAILLEE DE L'INVENTION

En référence à la figure 1, il est représenté un système d'inertage (1) d'un réservoir de carburant (2) d'un aéronef, tel qu'un avion ou un hélicoptère par exemple, ou analogue pour la mise en oeuvre du procédé d'inertage selon l'invention.

Le système d'inertage (1) comprend au moins un générateur (3) de gaz d'inertage alimenté en air, par exemple avec de l'air comprimé détourné de moteurs et/ou de l'air de la cabine des passagers. Le générateur (3) de gaz d'inertage comporte une sortie d'air appauvri en oxygène assimilé au gaz d'inertage. Le générateur (3) de gaz d'inertage pourra consister dans tout générateur (3) de gaz d'inertage bien connu de l'homme du métier, tel qu'un générateur à membrane de séparation et/ou en une pile à combustible par exemple.

Le gaz d'inertage est ensuite acheminé vers des moyens de distribution (4) du gaz d'inertage pour l'injection en tant que tel dans le ou les réservoirs (2) de carburant de l'aéronef. Les moyens de distribution (4) sont bien connus de l'état de la technique et comprennent, par exemple, des conduites de distribution, des valves, et des buses d'injection.

Ainsi, le système permet de générer et d'introduire un gaz d'inertage dans le ou les réservoirs (2) de carburant de l'aéronef pour des raisons de sécurité afin de réduire le risque d'explosion desdits réservoirs (2). Le gaz d'inertage injecté vise à rendre inerte le ou les réservoirs (2) de carburant, c'est-à-dire qu'il permet de réduire le taux d'oxygène présent dans le ou lesdits réservoirs (2), et notamment de maintenir ce taux sous un certain seuil, de préférence inférieur à 12%.

Par ailleurs, le ou les réservoirs (2) de carburant comprennent des capteurs d'oxygène (5) pour mesurer, en temps réel, le taux d'oxygène présent dans lesdits réservoirs (2) de carburant lors de l'utilisation de l'aéronef. La mesure du taux d'oxygène est ensuite envoyée, en temps réel, dans une unité de gestion (6) qui récolte également, en temps réel, des informations (7) relatives à la mission de l'aéronef, c'est-à-dire l'ensemble des différentes phases de vol, leur durée, leur taux de descente ou de montée... Toutes ces informations (7) sont fournies, en temps réel, par l'ordinateur de bord de l'aéronef par exemple.

L'unité de gestion (6), qui est constituée par exemple par une carte électronique comprenant un logiciel, est connectée au générateur (3) de gaz d'inertage, et est programmée pour démarrer ledit générateur (3) de gaz d'inertage lorsqu'au moins un capteur d'oxygène (5) mesure un taux d'oxygène supérieur à une valeur seuil haute, telle que par exemple 10 % d'oxygène. L'unité de gestion (6) est également connectée aux moyens de distribution (4) pour diriger le gaz d'inertage vers le ou les réservoirs (2) nécessitant une injection de gaz d'inertage en fonction de leur taux d'oxygène mesuré.

L'injection de gaz d'inertage est poursuivie jusqu'à ce que les capteurs d'oxygène (5) mesurent un taux d'oxygène en dessous de 8 %. Lorsque le taux d'oxygène mesuré est en dessous de 8 %, l'unité de gestion (6) stoppe le générateur (3) de gaz d'inertage pour économiser de l'énergie. Cette valeur seuil basse permet de stopper le générateur (3) de gaz d'inertage pendant une certaine durée avant que le taux d'oxygène ne remonte jusqu'à une valeur supérieure à 10 %, entrainant le redémarrage dudit générateur (3). Bien entendu, en fonction de la valeur seuil basse choisie, il se peut, en fonction des conditions de vol de l'aéronef, que le taux d'oxygène n'ai pas le temps de remonter jusqu'à une valeur critique qui ne satisferait pas la norme en vigueur avant l'atterrissage de l'aéronef. Ainsi, le générateur (3) de gaz d'inertage n'est pas rallumé pendant toute la durée restante de vol.

L'injection de gaz inertage n'est réalisée que sur une plage de valeur du taux d'oxygène présent dans les réservoirs (2), ce qui permet ainsi d'économiser de l'énergie et indirectement du carburant. De plus, cela permet également de gagner sur la maintenance des équipements en allongeant leur durée de vie car ils sont utilisés sur de plus courtes périodes.

En tout état de cause, selon une autre caractéristique de l'invention et afin de préparer la phase de descente de l'aéronef en toute sécurité, l'unité de gestion (6) est programmée pour redémarrer le générateur (3) de gaz d'inertage lorsque les informations (7) qu'elle collecte sur la mission de l'aéronef lui indiquent un certain nombre de minutes, par exemple 70 minutes, avant le début de la phase de descente de l'aéronef. Le nombre de minutes dépend du temps d'arrêt du générateur et des conditions ambiantes.

## Revendications

1. Procédé d'inertage d'au moins un réservoir de carburant (2) d'un aéronef, au moyen d'au moins un générateur (3) de gaz d'inertage, ***caractérisé* en ce que** le générateur (3) de gaz d'inertage est démarré de sorte à injecter du gaz d'inertage dans le réservoir de carburant (2) lorsqu'au moins un capteur d'oxygène (5) présent dans le réservoir (2) mesure un taux d'oxygène supérieur à une valeur seuil haute, et le générateur (3) de gaz d'inertage est arrêté de sorte à stopper l'injection de gaz d'inertage dans le réservoir de carburant (2) lorsque le taux d'oxygène mesuré est inférieur à une valeur seuil basse permettant de stopper le générateur (3) de gaz d'inertage pendant une certaine durée avant que le taux d'oxygène ne remonte jusqu'à la valeur seuil haute.

2. Procédé selon la revendication 1, ***caractérisé* en ce que** la valeur seuil haute est 10 % d'oxygène.

3. Procédé selon la revendication 1, ***caractérisé* en ce que** la valeur seuil basse est 8 % d'oxygène.

4. Procédé selon la revendication 1, ***caractérisé* en ce que** le générateur (3) de gaz d'inertage est redémarré lorsque des moyens d'information sur le vol de l'aéronef indiquent un certain nombre de minutes avant le début de la phase de descente de l'aéronef

5. Système d'inertage (1) d'au moins un réservoir de carburant (2) d'un aéronef, ledit système comprend au moins un générateur (3) de gaz d'inertage alimenté en air, des moyens de distribution (4) et d'injection de gaz d'inertage dans le réservoir de carburant (2), reliés au générateur (3) de gaz d'inertage, et au moins un capteur d'oxygène (5) installé dans le réservoir (2), ***caractérisé* en ce qu'**il comprend une unité de gestion (6), connectée au capteur d'oxygène (5) et au générateur (3) de gaz d'inertage, et programmée pour récolter, en temps réel, des mesures issues du capteur d'oxygène (5), et pour démarrer le générateur (3) de gaz d'inertage lorsque la mesure du taux d'oxygène est supérieure à une valeur seuil haute, et l'unité de gestion (6) est programmée pour arrêter le générateur (3) de gaz d'inertage lorsque la mesure du taux d'oxygène est inférieure à une valeur seuil basse permettant de stopper le générateur (3) de gaz d'inertage pendant une certaine durée avant que le taux d'oxygène ne remonte jusqu'à la valeur seuil haute.

6. Système selon la revendication 5, ***caractérisé* en ce que** la valeur seuil haute est 10 % d'oxygène.

7. Système selon la revendication 5, ***caractérisé* en ce que** la valeur seuil basse est 8 % d'oxygène.

8. Système selon la revendication 5, ***caractérisé* en ce que** l'unité de gestion (6) est programmée pour récolter, en temps réel, des informations (7) relatives à la mission de l'aéronef, et pour redémarrer le générateur (3) de gaz d'inertage lorsque les informations (7) qu'elle collecte sur la mission de l'aéronef lui indiquent une durée avant le début de la phase de descente de l'aéronef inférieure à 70 minutes.

## Patentansprüche

1. Verfahren zur Inertisierung mindestens eines Kraftstofftanks (2) eines Luftfahrzeugs mittels mindestens eines Inertisierungsgasgenerators (3), **dadurch gekennzeichnet, dass** der Inertisierungsgasgenerator (3) gestartet wird, um Inertisierungsgas in den Kraftstofftank (2) einzuspritzen, wenn mindestens ein Sauerstoffsensor (5), der im Tank (2) vorhanden ist, einen Sauerstoffgehalt misst, der über einem oberen Schwellenwert liegt, und der Inertisierungsgasgenerator (3) abgeschaltet wird, um die Einspritzung von Inertisierungsgas in den Kraftstofftank (2) anzuhalten, wenn der gemessene Sauerstoffgehalt unter einem unteren Schwellenwert liegt, wodurch der Inertisierungsgasgenerator (3) für eine bestimmte Zeitspanne angehalten werden kann, bevor der Sauerstoffgehalt bis auf den oberen Schwellenwert ansteigt.

2. Verfahren nach Anspruch 1, **dadurch gekennzeichnet, dass** der obere Schwellenwert bei 10 % Sauerstoff liegt.

3. Verfahren nach Anspruch 1, **dadurch gekennzeichnet, dass** der untere Schwellenwert bei 8 % Sauerstoff liegt.

4. Verfahren nach Anspruch 1, **dadurch gekennzeichnet, dass** der Inertisierungsgasgenerator (3) neu gestartet wird, wenn Fluginformationsmittel des Luftfahrzeugs eine bestimmte Anzahl von Minuten vor dem Beginn der Sinkphase des Luftfahrzeugs anzeigen.

5. Inertisierungssystem (1) für mindestens einen Kraftstofftank (2) eines Luftfahrzeugs, wobei das System mindestens einen mit Luft versorgten Inertisierungsgasgenerator (3) umfasst, Mittel zum Verteilen (4) und Einspritzen von Inertisierungsgas in den Kraftstofftank (2), die mit dem Inertisierungsgasgenerator (3) verbunden sind, und mindestens einen Sauerstoffsensor (5), der im Tank (2) installiert ist, **dadurch gekennzeichnet, dass** es eine Steuereinheit (6) umfasst, die an den Sauerstoffsensor (5) und den Inertisierungsgasgenerator (3) angeschlossen ist, und programmiert ist, um Messungen, die vom Sauerstoffsensor (5) ausgegangen sind, in Echtzeit zu sammeln, und um den Inertisierungsgasgenerator (3) zu starten, wenn die Messung des Sauerstoffgehalts über einem oberen Schwellenwert liegt, und die Steuereinheit (6) programmiert ist, um den Inertisierungsgasgenerator (3) abzuschalten, wenn die Messung des Sauerstoffgehalts unter einem unteren Schwellenwert liegt, wodurch der Inertisierungsgasgenerator (3) für eine bestimmte Zeitspanne angehalten werden kann, bevor der Sauerstoffgehalt bis auf den oberen Schwellenwert ansteigt.

6. System nach Anspruch 5, **dadurch gekennzeichnet, dass** der obere Schwellenwert bei 10 % Sauerstoff liegt.

7. System nach Anspruch 5, **dadurch gekennzeichnet, dass** der untere Schwellenwert bei 8 % Sauerstoff liegt.

8. System nach Anspruch 5, **dadurch gekennzeichnet, dass** die Steuereinheit (6) programmiert ist, um in Echtzeit Informationen (7) über die Mission des Luftfahrzeugs zu sammeln, und um den Inertisierungsgasgenerator (3) neu zu starten, wenn die Informationen (7), die sie über die Mission des Luftfahrzeugs sammelt, ihr eine Zeitspanne vor dem Beginn der Sinkphase des Luftfahrzeugs von weniger als 70 Minuten anzeigen.

## Claims

1. Method for inerting at least one fuel tank (2) of an aircraft, via at least one generator (3) of inerting gas, **characterised in that** the generator (3) of inerting gas is started so as to inject inerting gas into the fuel tank (2) when at least one oxygen sensor (5) present in the tank (2) measures an oxygen concentration greater than an upper threshold value, and the generator (3) of inerting gas is stopped so as to stop the injection of inerting gas into the fuel tank (2) when the oxygen concentration measured is less than a lower threshold value allowing to stop the generator (3) of inerting gas for a certain duration before the oxygen concentration goes back up to the upper threshold value.

2. Method according to claim 1, **characterised in that** the upper threshold value is 10% oxygen.

3. Method according to claim 1, **characterised in that** the lower threshold value is 8% oxygen.

4. Method according to claim 1, **characterised in that** the generator (3) of inerting gas is restarted when means for information on the flight of the aircraft indicate a certain number of minutes before the beginning of the phase of descent of the aircraft.

5. System (1) for inerting at least one fuel tank (2) of an aircraft, said system comprising at least one generator (3) of inerting gas supplied with air, means (4) for distribution and for injection of inerting gas into the fuel tank (2), connected to the generator (3) of inerting gas, and at least one oxygen sensor (5) installed in the tank (2), **characterised in that** it comprises a management unit (6), connected to the oxygen sensor (5) and to the generator (3) of inerting gas, and programmed to collect, in real time, measurements coming from the oxygen sensor (5), and to start the generator (3) of inerting gas when the measurement of the oxygen concentration is greater than an upper threshold value, and the management unit (6) is programmed to stop the generator (3) of inerting gas when the measurement of the oxygen concentration is less than a lower threshold value allowing to stop the generator (3) of inerting gas for a certain duration before the oxygen concentration goes back up to the upper threshold value.

6. System according to claim 5, **characterised in that** the upper threshold value is 10% oxygen.

7. System according to claim 5, **characterised in that** the lower threshold value is 8% oxygen.

8. System according to claim 5, **characterised in that** the management unit (6) is programmed to collect, in real time, information (7) relative to the mission of the aircraft, and to restart the generator (3) of inerting gas when the information (7) that it collects on the mission of the aircraft indicate to it a duration before the beginning of the phase of descent of the aircraft shorter than 70 minutes.
